# EUROPEAN PATENT APPLICATION

(11) **EP 1 748 647 A2**
(43) Date of publication of application: **31.01.2007**
(21) Application number: 06253797.2
(22) Date of filing: 20.07.2006
(51) Int. Cl.: H04N 5/44

(54) **Television broadcasting receiver**

(30) Priority: 27.07.2005 JP 2005216792
(71) Applicant: ORION ELECTRIC CO., Ltd., Fukui 915-8555 (JP)
(72) Inventor: Katayama, Satoshi, c/o Orion Electric Co., Echizen-city, Fukui 915-8555 (JP)
(74) Representative: Paget, Hugh Charles Edward

(57) **Abstract**

The invention provides a television broadcasting receiver provided with a digital tuner designed to achieve cost reduction by reducing the size of a digital signal processing substrate and reduction of influences of noise generated in a digital signal system on an analog signal system. A digital/analog shared tuner 323 provided with a SAW filter circuit and an IF amplification circuit is mounted on an analog signal processing substrate 32 and a digital demodulation section 111 is mounted on a digital signal processing substrate 31 and it is possible to thereby reduce the size of the digital signal processing substrate 31 and prevent noise generated on the digital signal processing substrate 31 from influencing on the analog signal system of the digital/analog shared tuner 323.

## Description

### BACKGROUND OF THE INVENTION

### Field of the Invention

The present invention relates to a television broadcasting receiver provided with a digital tuner, and more particularly, to a television broadcasting receiver designed to downsize its digital processing substrate which carries out processing such as digital demodulation of a digital broadcast signal.

### Description of the Related Art

Digital broadcasting is currently being carried out in any of satellite broadcasting, cable broadcasting and terrestrial broadcasting, while analog broadcasting is also being carried out. In accordance with this, a digital/analog shared tuner capable of receiving both digital broadcasting and analog broadcasting is used, but when a digital signal system circuit and an analog signal system circuit are formed close to each other, it is necessary to consider influences of noise from the digital signal system circuit on the analog signal system circuit. Conventional techniques related to such tuner noise control measures are disclosed in Japanese Patent Laid-Open Publications No. 8-289212, No.9-232989, and No.2002-152063 (Patent Documents 1 to 3) or the like.

Furthermore, conventional techniques intended for productivity improvement and cost reduction by achieving commonality of the substrate of a device capable of receiving digital broadcasting (so-called digital television or the like) are disclosed in Japanese Patent Laid-Open Publications No.2000-299576 and No.2003-61009 (Patent Documents 4 and 5) or the like.

Conventionally, in a device capable of receiving digital broadcasting (so-called digital television or the like), a digital tuner is often mounted on a digital signal processing substrate which mainly performs digital demodulation and processing on a compressed and coded audio/video signal (MPEG or the like). However, a digital signal processing substrate is generally formed of a multilayer substrate requiring high cost per unit area, and increasing the area of the substrate by mounting a relatively large component such as a digital tuner may increase the cost (the dead space may further increase when the tuner needs to be laid on its side on the substrate due to a demand for decreasing the size and thickness of the device).

Furthermore, as described above, when the tuner is a digital/analog shared type tuner, it is necessary to consider influences of noise generated on the digital signal processing substrate on the analog signal system inside the tuner, which incurs costs related to design and parts of a noise control circuit.

### SUMMARY OF THE INVENTION

In view of the above described problems, it is an object of the present invention to provide a television broadcasting receiver provided with a digital tuner capable of achieving cost reduction by reducing the size of a digital signal processing substrate and reducing influences of noise generated in a digital signal system on an analog signal system.

The television broadcasting receiver according to aspect 1 is a television broadcasting receiver provided with a digital tuner capable of receiving digital broadcasting, comprising the digital tuner on a substrate in addition to a digital signal processing substrate, which performs processing on a compressed and coded audio/video signal, wherein a audio/video signal generated from a digital broadcast signal received by the digital tuner is supplied from the substrate on which the digital tuner is mounted to the digital signal processing substrate.

According to the above described construction, the digital tuner is not mounted on the digital signal processing substrate which performs processing on a compressed and coded audio/video signal.

The television broadcasting receiver according to aspect 2 is the television broadcasting receiver according to aspect 1, wherein the substrate on which the digital tuner is mounted is an analog signal processing substrate which performs processing on an analog signal, the digital signal processing substrate is provided with a digital demodulation section, the audio/video signal supplied from the substrate on which the digital tuner is mounted to the digital signal processing substrate is thereby converted to an intermediate frequency signal before being subjected to digital demodulation and the digital signal processing substrate performs digital demodulation on the intermediate frequency signal.

According to the above described construction, the audio/video signal supplied from the analog signal processing substrate on which the digital tuner is mounted to the digital signal processing substrate is converted to an intermediate frequency signal before being subjected to digital demodulation.

The television broadcasting receiver according to aspect 3 is the television broadcasting receiver according to aspect 2, wherein the analog signal processing substrate on which the digital tuner is mounted comprises a surface acoustic wave filter circuit and an IF amplification circuit, the intermediate frequency signal is thereby converted to an amplified balanced-type signal and then supplied from the analog signal processing substrate on which the digital tuner is mounted to the digital signal processing substrate.

According to the above described construction, the audio/video signal supplied from the analog signal processing substrate on which the digital tuner is mounted to the digital signal processing substrate is an intermediate frequency signal before being subjected to digital demodulation and an amplified balanced-type signal.

The television broadcasting receiver according to aspect 4 is the television broadcasting receiver according to aspect 3, wherein the digital tuner comprises the surface acoustic wave filter circuit and IF amplification circuit.

According to the above described construction, the surface acoustic wave filter circuit and IF amplification circuit are provided inside the digital tuner. "Inside the digital tuner" means being inside a housing (shielded case) which makes up the digital tuner unit.

The television broadcasting receiver according to aspect 5 is the television broadcasting receiver according to any one of aspects 2 to 4, wherein the digital tuner is a digital/analog shared tuner that can also receive analog broadcasting.

According to the above described construction, the digital/analog shared tuner is not mounted on the digital signal processing substrate which mainly performs processing on a compressed and coded audio/video signal.

### BRIEF DESCRIPTION OF THE DRAWINGS

FIG. 1 is a block diagram showing an overview of the constructions of a digital signal processing substrate and an analog signal processing substrate provided for a television broadcasting receiver;
FIG. 2 is a block diagram showing only parts of the digital signal processing substrate and analog signal processing substrate related to the present invention;
FIG. 3 is a block diagram showing only parts of a digital signal processing substrate and an analog signal processing substrate according to Embodiment 2 related to the present invention;
FIG. 4 is a block diagram showing only parts of other examples of digital signal processing substrate and analog signal processing substrate related to the present invention;
FIG. 5 is a block diagram showing an overview of construction examples of a conventional digital signal processing substrate and a conventional analog signal processing substrate; and
FIG. 6 is a block diagram showing an overview of an example of the construction of a conventional digital signal processing substrate.

### DETAILED DESCRIPTION OF THE PREFERRED EMBODIMENTS

Hereinafter, specific embodiments of the present invention will be explained with reference to the attached drawings. The following embodiments are some aspects in implementing the present invention and are not intended to confine the present invention within the range thereof.

### [Embodiment 1]

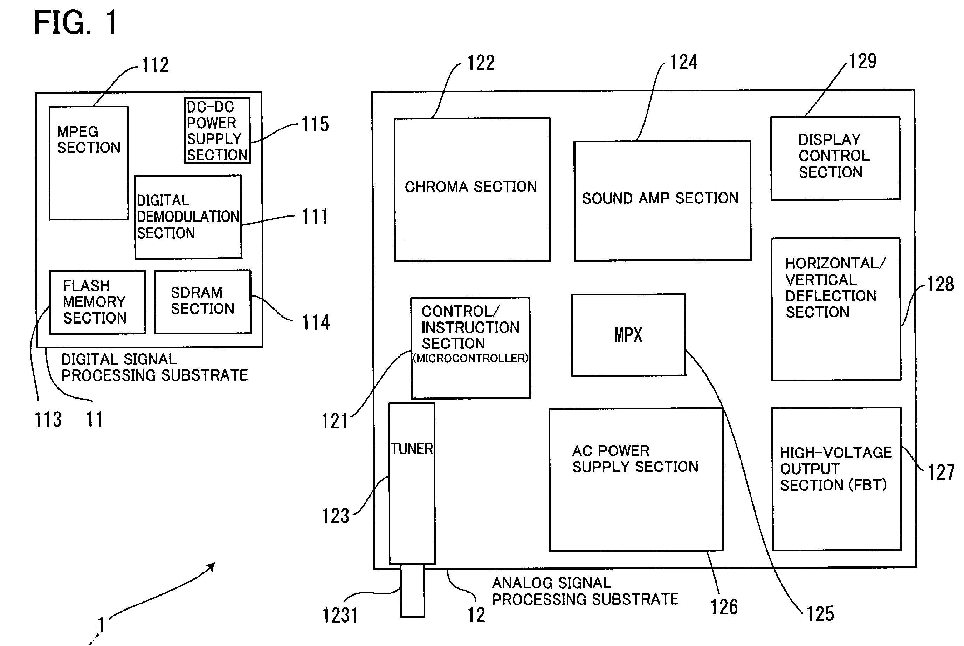

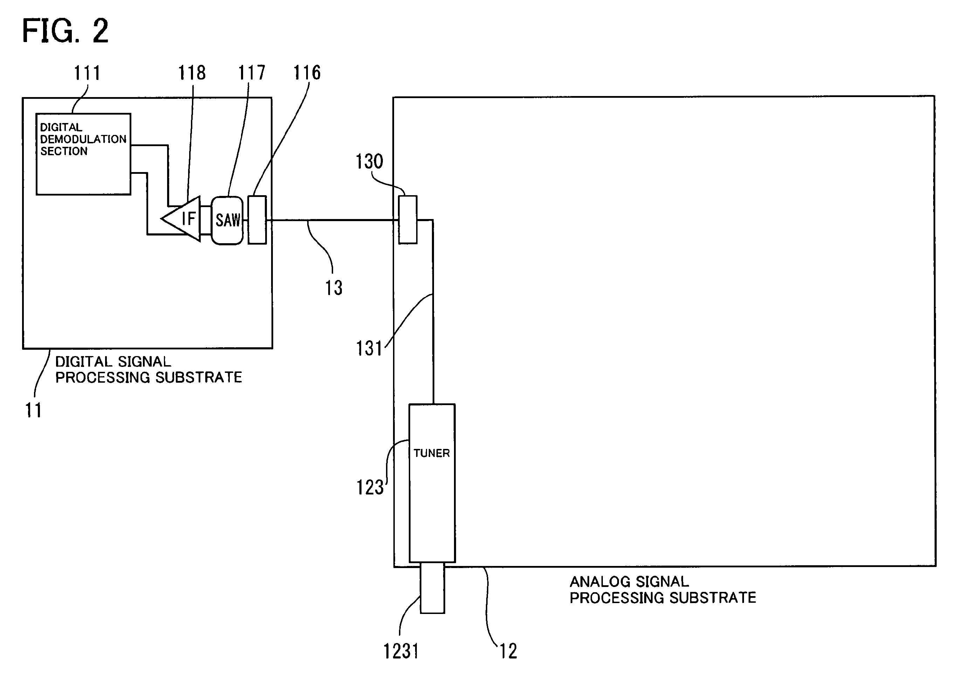

FIG. 1 is a block diagram showing an overview of the constructions of a digital signal processing substrate and an analog signal processing substrate provided for a television broadcasting receiver according to this embodiment. FIG. 2 is a block diagram showing only parts of the digital signal processing substrate and the analog signal processing substrate of the same device related to the present invention.

As shown in FIG. 1, the television broadcasting receiver (CRT display device) 1 of this embodiment is provided with a digital signal processing substrate 11 which is a substrate for mainly carrying out digital demodulation processing and processing on a compressed and coded audio/video signal (MPEG) and made up of a 6-layer substrate and an analog signal processing substrate (main substrate) 12 which is a substrate for carrying out overall control of the device, processing of generating an RGB signal from an intermediate frequency signal (hereinafter referred to as "IF signal") and processing on a display on a CRT and made up of a single-sided one-layer substrate. Though not shown, the television broadcasting receiver 1 is further provided with an input/output substrate which controls input/output signals or the like from an input interface, a CRT display tube which is a display section and a speaker or the like.

The digital signal processing substrate 11 is provided with a digital demodulation section 111 which performs digital demodulation processing on a digital modulated signal, an MPEG section 112 which performs decoding processing based on an MPEG standard, a flash memory section 113 and an SDRAM section 114 which are storage means, and a DC-DC power supply section 115 which supplies power from the analog signal processing substrate 12 to the respective blocks within the substrate. The analog signal processing substrate 12 is provided with a control section 121 which performs overall control of the device, a chroma section 122 which generates an RGB signal or the like, a digital/analog tuner 123 which is a digital/analog shared type tuner, a sound amplifier section 124 which performs processing on an audio signal, an MPX section 125 which is an analog broadcasting stereo audio demodulation circuit, an AC power supply section 126 which supplies power to the entire device from an outside power source, a high-voltage output section 127 which supplies a high voltage to the CRT, a horizontal/vertical deflection section 128 which generates a horizontal deflection output signal and a vertical deflection output signal to deflect CRT electron beams and a display control section 129 which performs display processing on the CRT or the like.

Next, with reference to FIG. 2, an overview of the constructions of parts of the digital signal processing substrate 11 and the analog signal processing substrate 12 related to the present invention will be explained. The digital signal processing substrate 11 and analog signal processing substrate 12 are provided with a connector 116 and a connector 130 to connect a wire (e.g., FFC) 13 to mutually send/receive signals and an IF signal (signal obtained by converting the frequency of a digital broadcast signal to an intermediate frequency signal) outputted from the digital/analog tuner 123 mounted on the analog signal processing substrate 12 is inputted to the digital signal processing substrate 11 through the wire 13. The digital signal processing substrate 11 is provided with a surface acoustic wave filter circuit (hereinafter referred to as a "SAW filter circuit") 117 and an IF amplification circuit 118, whereby the IF signal inputted from the analog signal processing substrate 12 is converted to an amplified balanced-type signal, inputted to the digital demodulation section 111 and the digital demodulation section performs digital demodulation processing. The analog broadcast signal received by the digital/analog tuner 123 is subjected to processing such as analog demodulation inside the analog signal processing substrate 12 and displayed on the CRT (the analog broadcast signal subjected to reception/display processing is never passed through the circuit constructed on the digital signal processing substrate 11).

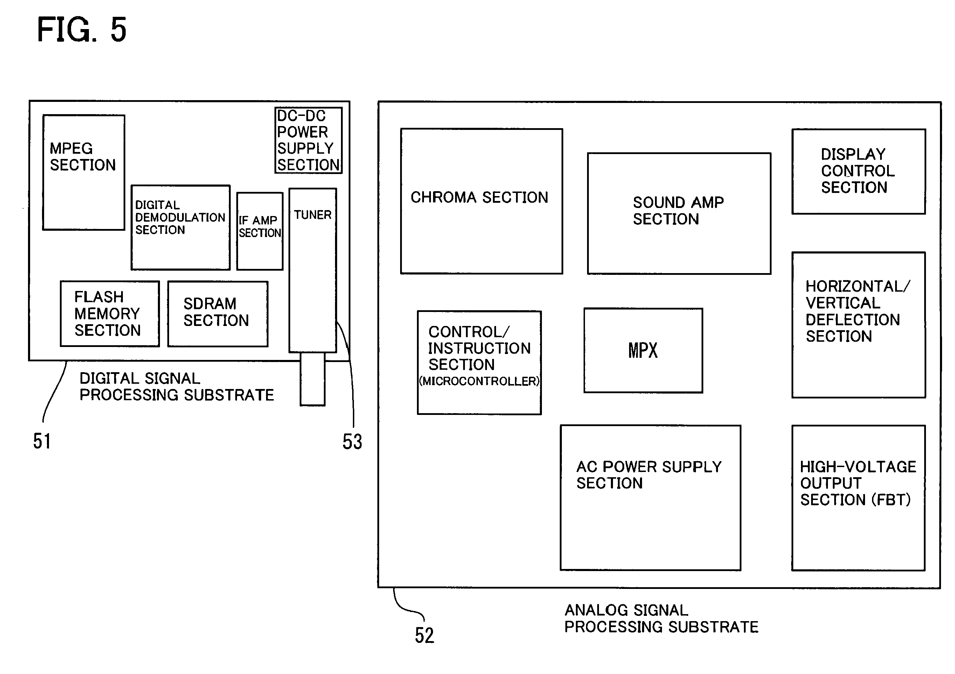

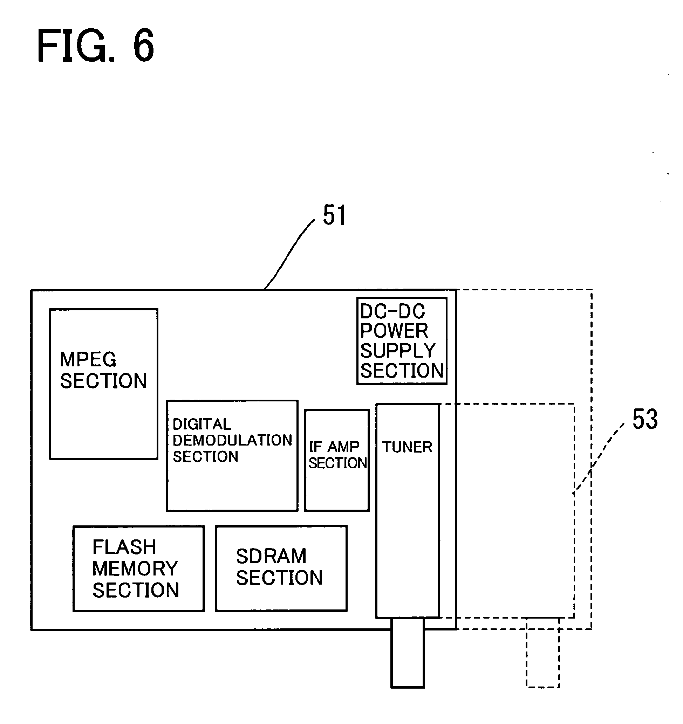

FIG. 5 is a block diagram showing an overview of construction examples of a conventional digital signal processing substrate and a conventional analog signal processing substrate. As shown in the same figure, according to a conventional television broadcasting receiver, a tuner 53 is mounted on a digital signal processing substrate 51, which makes it difficult to reduce the size of the digital signal processing substrate 51. As shown by a dotted line in FIG. 6 in particular, when the tuner 53 is required to be laid on its side on the substrate for reasons such as a demand for reducing the thickness of the device, this would further cause the size of the digital signal processing substrate 51 to increase. On the contrary, according to the configuration of the television broadcasting receiver of this embodiment, the digital/analog tuner 123 is not mounted on the digital signal processing substrate 11, and therefore it is possible to reduce the size of the digital signal processing substrate 11 which is a 6-layer substrate requiring high cost per unit area and thereby achieve a cost reduction.

Furthermore, according to the construction of the television broadcasting receiver of this embodiment, since the digital/analog shared tuner 123 is not mounted on the digital signal processing substrate 11, it is possible to reduce influences of noise from the digital signal processing substrate 11 on the analog circuit (analog broadcast signal) of the digital/analog shared tuner 123 compared to the case where the digital/analog shared tuner 123 is mounted on the digital signal processing substrate. That is, the digital/analog shared tuner 123 can be spatially separated from the digital circuit (digital signal processing substrate 11) which is a noise source and power to the digital/analog shared tuner 123 is supplied from the analog signal processing substrate, and therefore it is possible to drastically reduce influences of noise from the digital signal processing substrate 11 on the analog circuit of the digital/analog shared tuner 123 compared to a case where power is supplied from a power line on the digital signal processing substrate 11 which is susceptible to noise. This also makes it possible to reduce costs related to the circuit design and parts for noise control (because the circuit for noise control for the tuner need not be formed on the digital signal processing substrate 11, the size of the digital signal processing substrate 11 can be further reduced).

In addition, a audio/video signal supplied from the analog signal processing substrate 12 to the digital signal processing substrate 11 is converted to an intermediate frequency signal before being subjected to digital demodulation and mounting the digital/analog shared tuner 123 on the analog signal processing substrate 12 will not cause any additional circuit through which a digital signal passes to be formed on the analog signal processing substrate 12 (signal line (copper foil pattern) 131 in FIG. 2 is not intended to allow a digital signal to pass, but allow an IF signal which is a carrier to pass), and therefore it is possible to suppress influences of noise caused by mounting the digital/analog shared tuner 123 on the analog signal processing substrate 12.

Furthermore, when the digital/analog shared tuner 123 is mounted on the digital signal processing substrate 11, an antenna connection terminal 1231 of the digital/analog shared tuner 123 needs to be exposed to the outside of the device, which places restrictions on the location of the digital signal processing substrate 11 on the device, while the construction of this embodiment is free of such restrictions, provides a high degree of freedom in the layout of the digital signal processing substrate 11, and can thereby increase the degree of freedom of design (the analog signal processing substrate (main substrate) 12 on which the digital/analog shared tuner 123 is mounted has a large substrate area and has not so high a degree of freedom in the location inside the device, and since a power (AC) cable is connected to the analog signal processing substrate 12, the location inside the device is substantially determined from the beginning, and there is substantially no disadvantage that "mounting of the digital/analog shared tuner 123 on the analog signal processing substrate 12 would reduce the degree of freedom of the location of the analog signal processing substrate 12", while the advantage that "avoiding the digital/analog shared tuner 123 from being mounted on the digital signal processing substrate 11 increases the degree of freedom of the location of the digital signal processing substrate 11" is enhanced, and therefore the degree of freedom of design is further increased).

### [Embodiment 2]

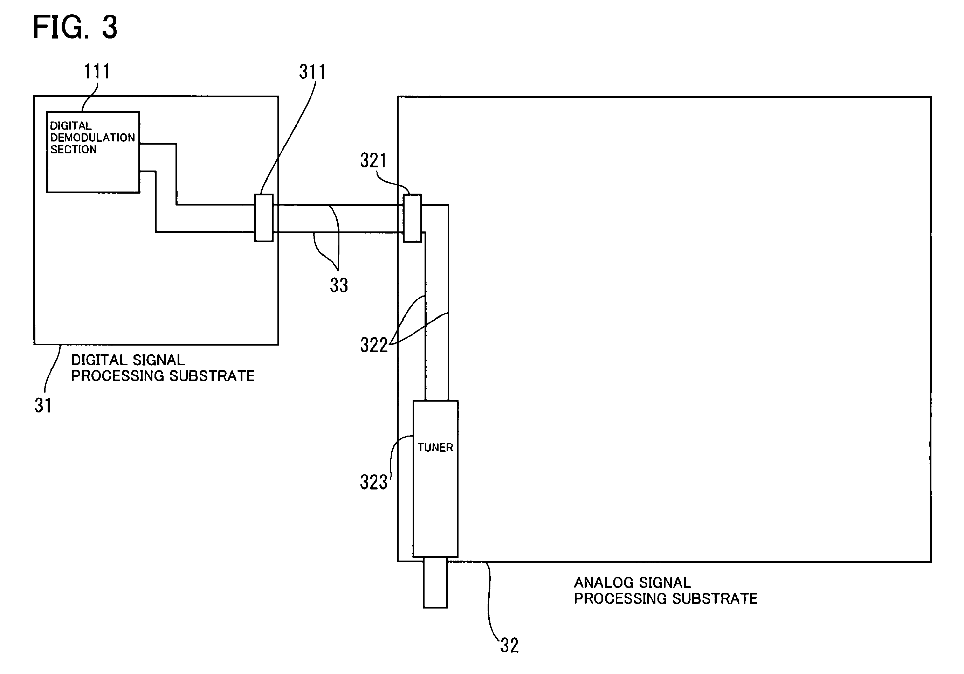

FIG. 3 is a block diagram showing only parts of the digital signal processing substrate and analog signal processing substrate of a television broadcasting receiver according to this embodiment related to the present invention. The same components as those in Embodiment 1 will be assigned the same reference numerals as those in Embodiment 1.

A digital/analog shared tuner 323 mounted on an analog signal processing substrate 32 in this embodiment is provided with a SAW filter circuit and an IF amplification circuit in its housing (unit) and the output (signal passing through a copper foil pattern 322) from the digital/analog shared tuner 323 becomes an IF signal which is an amplified balanced-type signal. The signal is inputted to a digital signal processing substrate 31 through wires 33 connected by a connector 311 and a connector 321 and a digital demodulation section 111 constructed on the digital signal processing substrate 31 performs digital demodulation processing.

As described above, according to the construction of the television broadcasting receiver of this embodiment, the surface acoustic wave filter circuit and IF amplification circuit are provided in the digital/analog shared tuner 323, and therefore it is possible to reduce influences of noise in the section from the digital/analog shared tuner 323 to the digital demodulation section 111 (circuit patterns on both substrates and wires 33) . That is, when a signal as a non-balanced-type signal is inputted to the digital signal processing substrate 31 (when a signal as a non-balanced-type signal is passed through the circuit pattern and wires 33 on both substrates), the signal is influenced by a mixture of noise into grounding wire or the like (fluctuation of the ground level) and when the signal before amplification is inputted to the digital signal processing substrate 31, the signal is also influenced by small noise received in the section of the wires 33 or the like. On the contrary, the construction of this embodiment can prevent such problems from occurring.

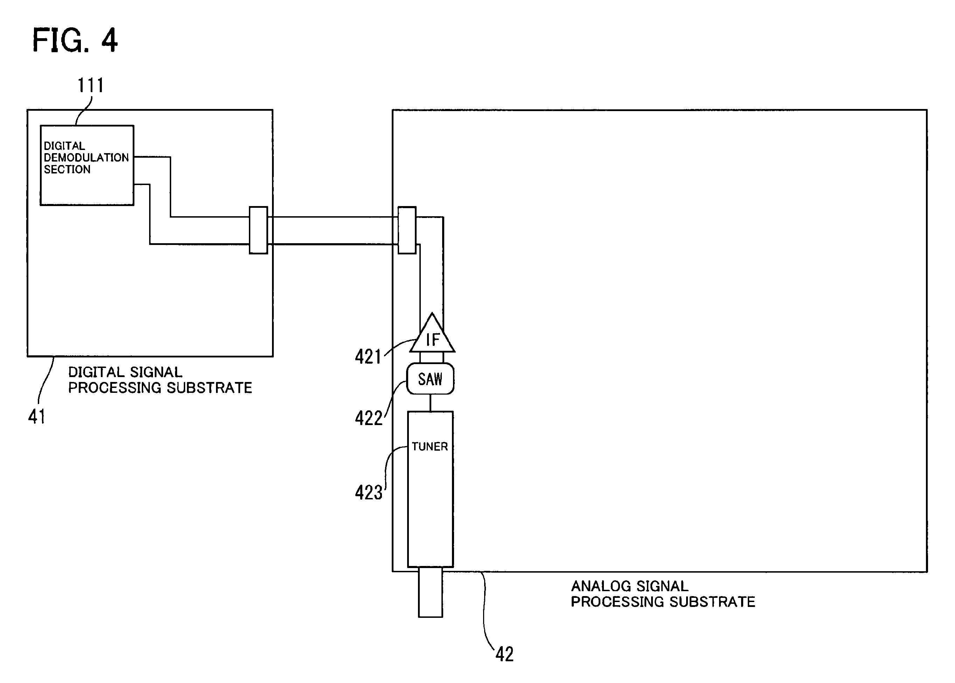

As shown in FIG. 4, instead of providing the SAW filter circuit 422 and IF amplification circuit 421 in the digital/analog shared tuner 423, it is also possible to form them on the analog signal processing substrate 42. In this case, for the same reason as that described above, it is desirable to provide the SAW filter circuit 422 and IF amplification circuit 421 in the vicinity of the digital/analog shared tuner 423.

The embodiment has explained the CRT display device as a specific example of the television broadcasting receiver, but the present invention is not limited to this and the present invention is effectively applicable to any device provided with a digital processing substrate, a substrate formed apart therefrom (the substrate need not necessarily be an "analog signal processing substrate" which mainly performs processing on an analog signal, but if it is a substrate requiring lower cost per unit area than the "digital processing substrate" on which a digital demodulation section or the like is formed, an effect of "cost reduction" is obtained and another effect of increasing the degree of freedom of the location of the "digital processing substrate" can also be achieved) and a digital tuner, and it can be, for example, a recording/reproducing such as a DVD recorder and a personal computer.

The effects of the present invention are as follows.

According to the television broadcasting receiver according to aspect 1, which is a television broadcasting receiver provided with a digital tuner capable of receiving digital broadcasting, comprising the digital tuner on a substrate in addition to a digital signal processing substrate, which mainly performs processing on a compressed and coded audio/video signal, wherein a audio/video signal generated from a digital broadcast signal received by the digital tuner is supplied from the substrate on which the digital tuner is mounted to the digital signal processing substrate, the digital tuner is not mounted on the digital signal processing substrate which mainly performs processing on a compressed and coded audio/video signal, and therefore it is possible to reduce the size of the digital signal processing substrate and achieve a cost reduction. That is, it is possible to prevent upsizing of the digital signal processing substrate by mounting the digital tuner which is a relatively large part on the digital signal processing substrate formed of a multilayer substrate and thereby reduce the size of the multilayer substrate requiring high manufacturing cost per unit area and achieve a cost reduction.

According to the television broadcasting receiver according to aspect 2, which is the television broadcasting receiver according to aspect 1, wherein the substrate on which the digital tuner is mounted is an analog signal processing substrate which mainly performs processing on an analog signal, the digital signal processing substrate is provided with a digital demodulation section, the audio/video signal supplied from the analog signal processing substrate on which the digital tuner is mounted to the digital signal processing substrate is thereby converted to an intermediate frequency signal before being subjected to digital demodulation and the digital signal processing substrate performs digital demodulation on the intermediate frequency signal, the audio/video signal supplied from the analog signal processing substrate on which the digital tuner is mounted to the digital signal processing substrate is converted to an intermediate frequency signal before being subjected to digital demodulation, and therefore it is possible to suppress influences of noise generated by mounting the digital tuner on the analog signal processing substrate. That is, when a digital demodulation section is formed on the analog signal processing substrate on which the digital tuner is mounted, this means that a new digital signal circuit (circuit through which a demodulated digital signal passes) is formed on the analog signal processing substrate, which produces influences of noise from the digital signal circuit on the analog system. However, according to the above described construction, the circuit newly formed on the analog signal processing substrate is a circuit through which an intermediate frequency signal before being subjected to digital demodulation, which is a carrier, passes, and therefore it is possible to suppress influences of noise caused by the mounting of the digital tuner.

According to the television broadcasting receiver according to aspect 3, which is the television broadcasting receiver according to aspect 2, wherein the analog signal processing substrate on which the digital tuner is mounted comprises a surface acoustic wave filter circuit and an IF amplification circuit, the intermediate frequency signal is thereby converted to an amplified balanced-type signal and then supplied from the analog signal processing substrate on which the digital tuner is mounted to the digital signal processing substrate, the audio/video signal supplied from the analog signal processing substrate on which the digital tuner is mounted to the digital signal processing substrate is an intermediate frequency signal before being subjected to digital demodulation and an amplified balanced-type signal, and therefore it is possible to reduce influences of noise received in the section corresponding to the connection between the substrates (e.g., wire such as FFC).

According to the television broadcasting receiver according to aspect 4, which is the television broadcasting receiver according to aspect 3, wherein the digital tuner comprises the surface acoustic wave filter circuit and IF amplification circuit, the surface acoustic wave filter circuit and IF amplification circuit are provided inside the digital tuner, and therefore it is possible to reduce influences of noise received in the section from the digital tuner to the digital demodulation section.

According to the television broadcasting receiver according to aspect 5, which is the television broadcasting receiver according to any one of aspects 2 to 4, wherein the digital tuner is a digital/analog shared tuner that can also receive analog broadcasting, the digital/analog shared tuner is not mounted on the digital signal processing substrate which mainly performs processing on a compressed and coded audio/video signal, and therefore it is possible to reduce influences of noise from the digital signal processing substrate on the analog system (analog broadcast signal) of the tuner caused by mounting the digital/analog shared tuner on the digital signal processing substrate.

## Claims

1. A television broadcasting receiver provided with a digital tuner capable of receiving digital broadcasting, comprising the digital tuner on a substrate in addition to a digital signal processing substrate, which mainly performs processing on a compressed and coded audio/video signal, wherein a audio/video signal generated from a digital broadcast signal received by the digital tuner is supplied from the substrate on which the digital tuner is mounted to the digital signal processing substrate.

2. The television broadcasting receiver according to claim 1, wherein the substrate on which the digital tuner is mounted is an analog signal processing substrate which mainly performs processing on an analog signal, the digital signal processing substrate is provided with a digital demodulation section, the audio/video signal supplied from the substrate on which the digital tuner is mounted to the digital signal processing substrate is thereby converted to an intermediate frequency signal before being subjected to digital demodulation and the digital signal processing substrate performs digital demodulation on the intermediate frequency signal.

3. The television broadcasting receiver according to claim 2, wherein the analog signal processing substrate on which the digital tuner is mounted comprises a surface acoustic wave filter circuit and an IF amplification circuit, the intermediate frequency signal is thereby converted to an amplified balanced-type signal and then supplied from the analog signal processing substrate on which the digital tuner is mounted to the digital signal processing substrate.

4. The television broadcasting receiver according to claim 3, wherein the digital tuner comprises the surface acoustic wave filter circuit and IF amplification circuit.

5. The television broadcasting receiver according to any one of claims 2 to 4, wherein the digital tuner is a digital/analog shared tuner that can also receive analog broadcasting.
